# EUROPÄISCHE PATENTSCHRIFT

(11) **EP 0 492 327 B1**
(45) Veröffentlichungstag und Bekanntmachung des Hinweises auf die Patenterteilung: **13.11.1996**
(21) Anmeldenummer: 91121472.4
(22) Anmeldetag: 14.12.1991
(51) Int. Cl.: H04M 1/65

(54) **Anrufbeantworter mit Nachrichtenaufzeichnung unter Wegfall der Schlussansage**
Telephone answering device with message recording and removal of the end announcement
Répondeur téléphonique avec enregistrement de messages et suppression de l'annonce de conclusion

(30) Priorität: 22.12.1990 DE 9017357 U
(43) Veröffentlichungstag der Anmeldung: 01.07.1992
(73) Patentinhaber: GRUNDIG E.M.V. Elektro-Mechanische Versuchsanstalt Max Grundig GmbH & Co. KG, D-90762 Fürth (DE)
(72) Erfinder: Mittelstädt, Rainer, GRUNDIG E.M.V. Max Grundig, W-8510 Fuerth (DE)

(56) Entgegenhaltungen:
- EP-A- 0 012 864
- DE-U- 9 017 357
- US-A- 4 851 829
- PATENT ABSTRACTS OF JAPAN vol. 008, no. 135 (E-252)22. Juni 1984 & JP-A-59 044 164

## Beschreibung

Die Erfindung betrifft einen Anrufbeantworter gemäß dem Oberbegriff des Patentanspruchs 1.

Nachrichtenübertragungssysteme, bei denen ankommende Anrufe (bei einem personell nicht besetzten Teilnehmeranschluß) durch einen automatisch arbeitenden Anrufbeantworter (private Zusatzeinrichtung) entgegengenommen werden, sind bekannt. Zur Durchführung dieses Vorgangs muß lediglich eine Schalteinrichtung betätigt werden, die eine Umschaltung der Hauptanschlußleitung vom Fernsprechapparat auf den automatischen Anrufbeantworter bzw. Auskunftgeber vornimmt.

Wie Untersuchungen ergeben haben, kommt der Sprachkommunikation nach wie vor hohe Bedeutung zu, so daß auch bei zukünftigen Gerätekombinationen, meistens bestehend aus Fernsprechapparat, Anrufbeantworter und Telekopierer, das Umsteuern in den Anrufbeantworterbetrieb möglich sein wird. Kommt beispielsweise über die Hauptanschlußleitung zur Geratekombination ein Rufsignal an, so wird mittels einer in der Gerätekombination angeordneten Ruferkennungsschaltung und einer damit verbundenen Steuereinrichtung die Kommunikationsart, z.B. Anrufbeantworter- oder Telekopierer-Betrieb, ermittelt und ein Ansagetext zum rufenden Teilnehmer über das Nachrichtennetz übertragen. Als Massenspeicher für die Ansage und für die Aufzeichnung der gesprochenen Nachricht des anrufenden Teilnehmers wurde meist ein Magnetband-Speicher eingesetzt. Magnetbandspeicher werden in der Regel dort benutzt, wo es nicht auf kurze Zugriffszeiten ankommt, wobei von Vorteil die geringen Kosten pro Bit durch die hohe Aufzeichnungsdichte (man rechnet hier mit Mikro-Pfennigen pro Bit) und die Nichtflüchtigkeit der Daten sind.

Im Laufe der Entwicklung von Speichertechnologien wurde untersucht, ob nicht auch andere Speichertypen für den Einsatzfall Sprachspeicherung günstiger sind. Bestimmend für den Einsatz des jeweiligen Speichertyps von digitalen Speichern sind im wesentlichen die Speicherkapazität, die Zugriffszeit, die Kosten pro Bit oder Byte und die Flüchtigkeit der gespeicherten Daten.

Auch die Eignung von flüchtigen Schreib-/Lese-Speichern, z.B. Halbleiterspeicher, wurde untersucht. Vorteile der Halbleiterspeicher sind die kurze Zugriffszeit, die hohe Packungsdichte, die einfache Verknüpfung mit anderen Halbleiterbausteinen sowie die einfache Möglichkeit der Speichererweiterung. In der Regel werden dynamische oder statische Schreib-/Lese-Speicher benutzt.

Auch der Einsatz von elektrisch programmierbaren und löschbaren Festwertspeichern (EEPROM, Electrically Erasable Programmable Read Only Memory) ist bekannt, wie dies in der DE-OS 31 19 226 oder der DE-PS 32 14 249 erläutert ist.

Das beim Schreib-/Lese-Vorgang angewandte Verfahren, insbesondere die Ausgestaltung der Speicheradressierung beim Aufsprechen des Ansagetextes, ist in der EP-B1-0 012 864 ausführlich beschrieben. Der Festkörperspeicher für den Ansagetext ist wahlweise mit einem Meldetext-Bereich, einem Absagetext-Bereich und einem Beantwortungstext-Bereich oder mit nur einem Ansagetext-Bereich betreibbar. Die einzelnen Speicherbereiche sind direkt adressierbar. Zur Adressierung der Speicherplätze der einzelnen Speicherbereiche (bei der Aufnahme bzw. Wiedergabe der einzelnen Textabschnitte) ist ein Zähler vorgesehen, dem ein Takt zugeführt wird. Weiterhin ist im Fernsprechapparat ein Magnetbandspeicher angeordnet, welcher zur Aufzeichnung der Nachricht des anrufenden Teilnehmers dient. Bei Netzausfall (Lichtnetz) wird die im flüchtigen Festkörperspeicher (beispielsweise D-RAM, Dynamic Random Access Memory) gespeicherte Ansage gelöscht. Um sicherzustellen, daß bei wiederkehrender Netzspannung die Ansage wieder zur Verfügung steht, wird diese beim Einsprechen in das Mikrofon gleichzeitig im digitalen Speicher und im Magnetbandspeicher gespeichert. Bei Wiederkehr der Netzspannung überträgt die Steuereinrichtung dann mittels eines speziellen Ausfallsteuerprogramms die Ansage vom Magnetbandspeicher in den digitalen Speicher. Zu diesem Zweck ist im Verbindungsweg zwischen dem Ausgang des Magnetbandspeichers (oder A/D-Umsetzers) und Eingang des digitalen Speichers ein Schalter angeordnet. Dieser wird durch die Steuereinrichtung geschlossen, sobald der Magnetbandspeicher am Anfang des Ansagetextes steht.

Um die zur digitalen Speicherung des Sprachsignals im Festkörperspeicher erforderliche Speicherkapazität gering zu halten, wird zur Analog-Digital-Umsetzung des Sprachsignals beim Gegenstand der EP-B1-0 012 864 ein Delta-Modulator benutzt. Wie ausführlich erläutert ist, läßt sich dadurch die zur Erzeugung einer guten Sprachqualität erforderliche Datenrate auf ca. 12 kbit/s verringern. Weiterhin ist unmittelbar vor dem Eingang des digitalen Speichers eine Verzögerungsschaltung eingefügt, die das digitale Sprachsignal mindestens um die Ansprechzeit bzw. Detektionszeit einer Diskriminatorschaltung (dient zur Erkennung eines digitalen Sprachsignals) verzögert.

Weitere Einzelheiten zur schaltungstechnischen Realisierung, insbesondere der digitalen Sprachverarbeitung, sind in der Zeitschrift "Telcom Report 7 (1984), Heft 5, Seiten 296 bis 301 beschrieben. Dabei wird von dem Anwendungsfall "Telefon mit eingebautem elektronischem Anrufbeantworter" ausgegangen, wobei in der Gerätekombination ein elektronischer Sprachspeicher und Mittel zur digitalen Sprachverarbeitung angeordnet sind. Das Sprachsignal (NF-Signal) wird dort ebenfalls unter Benutzung des Verfahrens der Delta-Modulation in den digitalen Speicher gespeichert. Eine Schaltung zur Unterdrückung von Sprechpausen sorgt dafür, daß eine Ansage in natürlicher Sprache mit einer Sprechzeit von z.B. 20 Sekunden eine entsprechende Speicherzeit von nur etwa 16 Sekunden benötigt. Diese Methode zur Speicherplatzersparnis wird auch bei der Speicherung von Standard-Sprachmodulen oder kundenspezifischen Sprachmodulen benutzt. Die in Kassettenform aufgebauten Sprachmodule mit Standardtexten haben zusätzlich zwei Codierschalter zur Einstellung der Wochentage und der Uhrzeit in Stunden, wodurch sich 128 verschiedene Textmöglichkeiten ergeben. Zum Auslesen der Ansage werden von einer Mikroprozessorsteuerung die Adressen über einen Datenbus dem digitalen Speicher zugeführt. Mit Hilfe des Read-Signals werden die Sprachdaten über den Datenbus zum Parallel-Serien-Umsetzer, und von diesem in serieller Form dem Delta-Modulator übermittelt. Die bei der Speicherung verkürzten Sprachpausen werden mittels der Mikroprozessorsteuerung wieder auf die ursprüngliche Pausenlänge gebracht.

Für die Digital-Analog-Umsetzung benötigt der Delta-Modulator einen externen Takt mit einer Frequenz von 31,25 kHz. Die Bitrate beträgt demzufolge 31,25 kbit/s und die für ein 8-bit-Zeichen benötigte Mikroprozessorverarbeitungszeit beträgt 250 µs. Das Ausgangssignal des Deltamodulators wird einem Bandpaß zugeführt, an dessen Ausgang dann wieder das rekonstruierte niederfrequente Sprachsignal zur Verfügung steht.

Derzeit werden für die Ansage als Sprachspeicher 1-MBit-DRAM (DRAM, Dynamic Random Access Memory) benutzt, welche in Folge hoher Stückzahlen besonders kostengünstig im Handel erhältlich sind. Bei einer Bitrate von 32 kBit/s stehen dann eine Sprechzeit von ca. 30 Sekunden zur Verfügung. Entsprechend verkürzt sich diese Sprechzeit, wenn die Ansage mit hoher Sprachqualität, beispielsweise mit 64 kBit/s in den digitalen Speicher eingeschrieben wird.

In der nicht vorveröffentlichten deutschen Patentanmeldung vom 26.11.90 und dem Aktenzeichen P 40 37 514.5 der Anmelderin ist ein Weg aufgezeigt worden, trotz relativ geringer zur Verfügung stehenden Speicherkapazität die Sprachqualität der Ansage zu verbessern. Dabei ist allerdings zu berücksichtigen, daß bei höherer Sprachqualität (und auch höherer Bitrate) die zur Verfügung stehende Sprechzeit kleiner wird.

Weiterhin ist aus der JP-A-59 044 164 ein speziell ausgestaltetes Nachrichtenübertragungssystem bekannt, bei dem zu vorgebbaren Zeitpunkten ein automatischer Verbindungsaufbau zwischen zwei Fernsprechapparaten (der Teilnehmer A und B) von der Vermittlungseinrichtung des Nachrichtenübertragungssystems durchgeführt wird. Hierzu werden die von einem Teilnehmer A eingegebenen Sendeaufträge (Rufnummer des gerufenen Fernsprechapparats bzw. Teilnehmer B sowie Zeitpunkt) in einem Speicher der Vermittlungseinrichtung zwischengespeichert. War die Registration des Sendeauftrags des Teilnehmers A erfolgreich, wird von der Vermittlungseinrichtung eine Bestätigung "registration end message (or tone)" zum Teilnehmer A gegeben. Zum vom Teilnehmer A vorgegebenen Zeitpunkt baut die Vermittlungseinrichtung anhand der zwischengespeicherten Rufnummern automatisch eine Verbindung zwischen den beiden Teilnehmern A und B auf.

Der Erfindung liegt die Aufgabe zugrunde, eine verbesserte Ausnutzung von Sprachspeichern mit relativ geringer Speicherkapazität, insbesondere bei einem Anrufbeantworter, zu ermöglichen.

Diese Aufgabe wird bei einem gattungsgemäßen Anrufbeantworter durch die kennzeichnenden Merkmale des Patentanspruchs 1 gelöst.

Der erfindungsgemäße Anrufbeantworter nach Patentanspruch 1 weist den Vorteil auf, daß auf überraschend einfache Art und Weise durch den Wegfall der Schlußansage dieser Speicherbereich zusätzlich zur Verfügung steht und beispielsweise zur Verbesserung der Sprachqualität der Ansage genutzt werden kann. Hierzu ist der EP-A-0 012 864 keine Anregung zu entnehmen, wobei dort der Weg mittels spezieller Delta-Modulationsschaltung aufgezeigt wird. Weiterhin ist beim erfindungsgemäßen Anrufbeantworter von Vorteil, daß kein zusätzlicher Schaltungsaufwand erforderlich ist, da für die Erzeugung der Signaltöne und/oder der Hinweistöne bereits in modernen Anrufbeantwortern vorhandene Einrichtungen, wie beispielsweise zur Erzeugung eines Signaltons, welcher als Sprechaufforderung für den anrufenden Teilnehmer dient ("Bitte sprechen Sie nach dem Signalton"), mitbenutzt werden können. Beim Gegenstand der EP-A-0 012 864 wird ein elektronischer Impulsgeber, wie beim bekannten Stand der Technik, zur Erzeugung der Wählinformation nach dem Mehrfrequenz-Codewahl-Verfahren benutzt.

Bei der Ausführungsform des Anrufbeantworters gemäß Patentanspruch 2 wird als Tonsignal der Besetztton benutzt. Es kann davon ausgegangen werden, daß auch von einem Laien dieser Hinweis verstanden wird. Aus der Benutzung von Fernsprechapparaten kennt der Teilnehmer schon seit langem, daß bei erfolglosem Belegungsversuch in der Regel ein Besetztsignal (Besetztton, Besetztzeichen, Hörtöne) gegeben wird. In der Regel wird der Teilnehmer bei Erhalt des Besetztsignals den Fernsprechhörer wieder auflegen, wodurch die vermittlungstechnischen Einrichtungen die hergestellte Verbindung wieder auslösen.

Die Erfindung wird im folgenden anhand einer in der Zeichnung dargestellten Ausführungsform näher beschrieben und erläutert.

Es zeigen:
- Fig. 1: eine Ausführungsform des erfindungsgemäßen Anrufbeantworters in Ansicht und
- Fig. 2: das Blockschaltbild der Ausführungsform nach Fig.1.

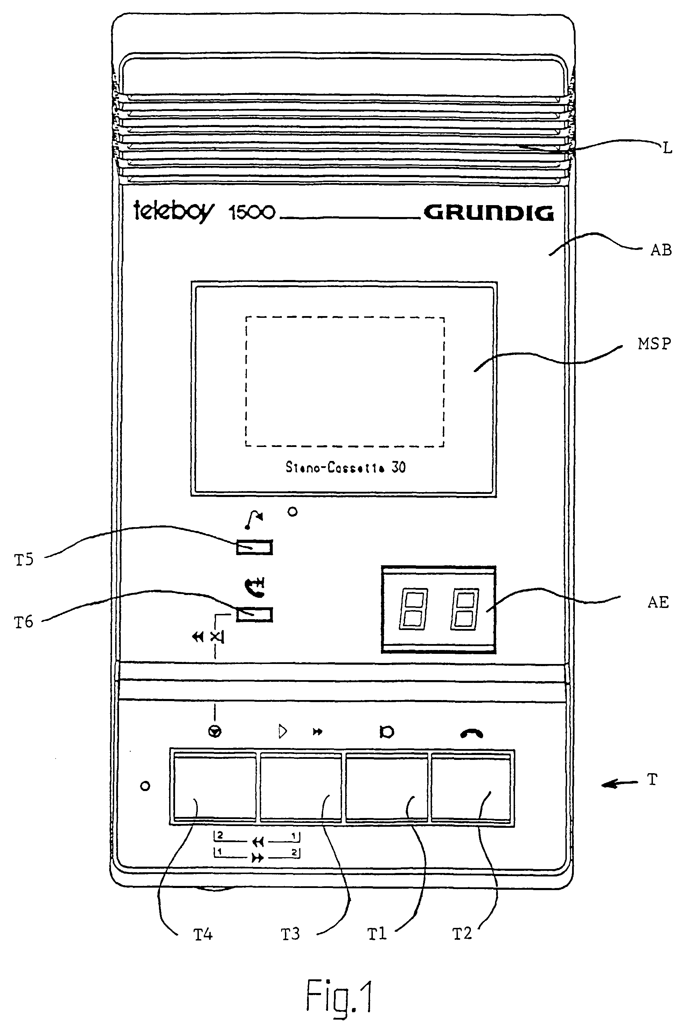

Bei der in Fig. 1 dargestellten Ausführungsform eines Anrufbeantworters kann der anrufende Teilnehmer verschiedene Ansagetexte erhalten. Anstelle von Sprachdaten können auch Textdaten im Anrufbeantworter abgespeichert sein, die ausgelesen über das Nachrichtennetz übertragen und an der Anzeigeeinheit des Komforttelefons des anrufenden Teilnehmers angezeigt werden.

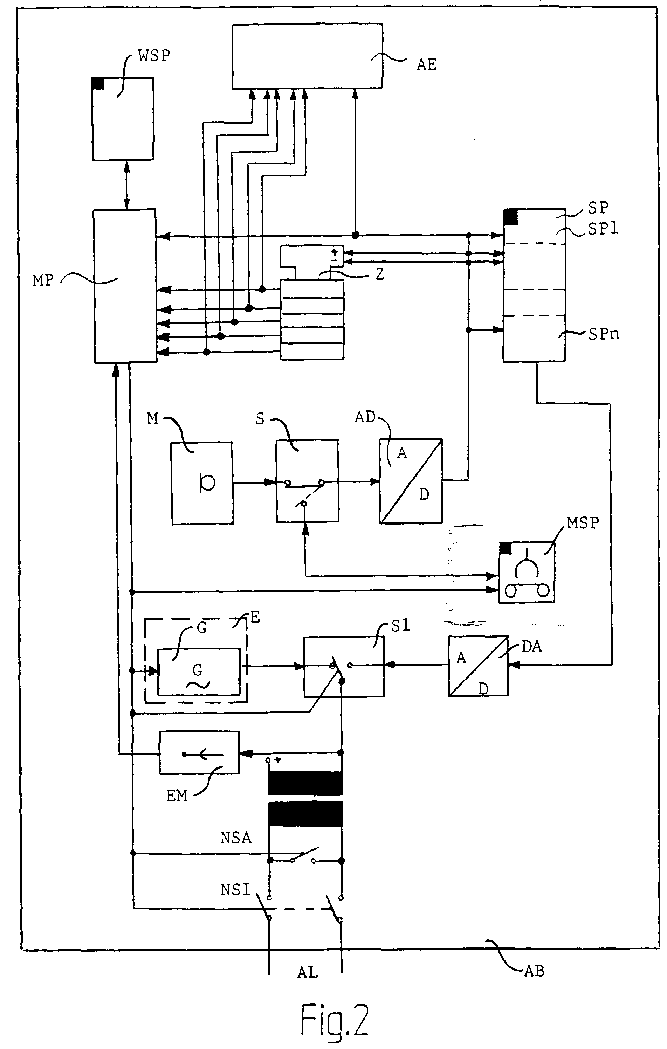

Der Anrufbeantworter AB weist einen digitalen Speicher SP (vgl. Fig. 2), gegebenenfalls mit mindestens zwei Speicherbereichen variabler Größe für die Aufnahme kundenspezifischer Ansagetexte auf. Weiterhin enthält der Anrufbeantworter AB eine Anzeigeeinheit AE, an welcher der belegte Teil relativ zur Gesamtkapazität des jeweiligen Speicherbereichs (SP1, ..., SPn) angezeigt wird. Weitere an der Anzeigeeinheit AE dargestellte Informationen sind beispielsweise die Anruf- und Nachrichtenzählung, die Textwahlanzeige, die Anzeige der Restspielzeit, Codes für Gerätefunktionen, Fehler und Fernabfrage, Bandpositionierung usw.

Zur Steuerung der verschiedenen Betriebsfunktionen des Anrufbeantworters AB in den verschiedenen Betriebsarten, z.B. "Nur-Anrufbeantwortung"; "Anrufbeantwortung mit Aufzeichnung und Fernabfrage";" Abhören aufgezeichneter Nachrichten"; "Diktierbetrieb" und "Konferenzbetrieb", sind vom Benutzer entsprechende Bedienelemente T1 bis T4 und T6 zu betätigen. Beispielsweise betätigt der Benutzer zur Aufzeichnung eines Ansagetextes zuerst die Taste T1 und anschließend die Taste T2; für die Aufzeichnung eines Diktats zuerst wieder die Taste T1 und anschließend die Taste T3. Durch Betätigen der Taste T2 kann vom Benutzer die aufgezeichnete Nachricht, d.h. die Ansage oder das Diktat, abgehört werden.

Die Lautsprecher L sind im flachen pultförmigen Gehäuse des Anrufbeantworters AB unter den Kühlschlitzen bzw. dem anschließenden Lautsprechergrill angeordnet. Neben den Lautsprechern L ist das Laufwerk für den Magnetbandspeicher MSP (Aufzeichnungskassette) angeordnet, welches von der Steuereinrichtung MP (vgl. Fig. 2) angesteuert wird. Vor dem Kassettenfach ist eine Kassettenfachtaste T5 angeordnet, welche vom Benutzer zum Kassettenwechseln zu betätigen ist. Unterhalb dieser Taste T5 befindet sich eine weitere Taste T6. Diese ist vom Benutzer für das Mitschneiden von Telefonkonferenzen zu betätigen.

Fig. 2 zeigt in Form eines Blockschaltbilds weitere Einzelheiten des erfindungsgemäßen Anrufbeantworters AB. Die Länge der über Mikrofon M, A/D-Umsetzer AD dem jeweiligen Speicherbereich SP1, ..., SPn zugeführten Ansagetexte ist direkt proportional zum Zählerstand eines mit dem digitalen Speicher SP verbundenen Vorwärts-/Rückwärtszählers Z.

Der digitale Schreib-/Lesespeicher SP für die Ansagetexte ist vorzugsweise ein serieller Halbleiterspeicher, beispielsweise ein DRAM mit 1 Mbit Gesamtspeicherkapazität. Die Steuereinrichtung MP steuert anhand des jeweiligen Zählerstands am Ende des Ansagetextes den jeweiligen Speicherbereich SP1, ..., SPn an und leitet daraus ein Kriterium zur automatischen Umschaltung der Betriebsart des Anrufbeantworters AB ab (d.h. Abhörautomatik für die Ansagetexte, Auskunftgeberfunktion; Ansage ABA, d.h. Meldung, Mitteilung und keine Schlußansage; Ansage AB, d.h. Meldung, Mitteilung mit mindestens 3 Sekunden und maximal 30 Sekunden; Ansage vom SP und Auskunft vom MSP usw.). Bei herkömmlichen Anrufbeantwortern ist die Dauer der Schlußansage (entsprechend der Postvorschriften) mindestens 3 Sekunden und maximal 30 Sekunden.

Der in Fig. 2 dargestellte Anrufbeantworter AB steht über die Hauptanschlußleitung AL mit dem Fernmeldenetz in Verbindung. Die Steuereinrichtung, vorzugsweise ein Mikroprozessor MP, ist mit einem Nummernschalter-Impulskontakt NSI, einem NSA-Kontakt NSA sowie einem Umschalter S1 verbunden. Mit dem Nummernschalter-Impulskontakt NSI werden Impulsserien erzeugt, der NSA-Kontakt dient zur Abschaltung der Sprechschaltung während der Wahl und mit dem Umschalter S1 erfolgt eine Umschaltung auf verschiedene Nachrichtenquellen.

Weiterhin ist der Mikroprozessor MP mit einem Speicher WSP mit Wählinformationen (z.B. Rufnummern) verbunden. Der Mikroprozessor MP übernimmt die Funktion eines Wählautomaten und kann auch eine Vermittlungsfunktion ausführen. Hierbei steuert der Mikroprozessor MP den Austausch vermittlungstechnischer Informationen zwischen dem Anrufbeantworter AB und den Vermittlungsstellen des Fernmeldenetzes. Die Erzeugung der Wählinformation erfolgt im Anrufbeantworter entweder mit dem Nummernschalter-Impulskontakt NSI oder mit einem nach dem Mehrfrequenz-Codewahl-Verfahren arbeitenden Generator G.

Die Funktionsweise des erfindungsgemäßen Anrufbeantworters AB wird im folgenden näher beschrieben und erläutert.

Kommt über die Hauptanschlußleitung AL ein Rufsignal an, so wird dieses von einem Rufempfangskreis erkannt und ein Steuersignal für den Mikroprozessor MP ausgelöst, welcher die Verbindung zum anrufenden Teilnehmer herstellt. Gesteuert durch den Mikroprozessor MP wird der im digitalen Speicher SP enthaltene Ansagetext ausgelesen und zum anrufenden Teilnehmer über die Hauptanschlußleitung AL übermittelt. Der anrufende Teilnehmer kann eine gesprochene Nachricht hinterlassen, welche im Magnetbandspeicher MSP zwischengespeichert wird. Danach würde bei herkömmlichen Anrufbeantwortern der anrufende Teilnehmer die Schlußansage erhalten.

Moderne Anrufbeantworter enthalten in der Regel einen Empfänger EM und den Generator G. Dabei dient der Empfänger EM zur Decodierung der für die Fernabfrage erforderlichen Codeworte. Diese werden zur Übertragung über das Fernmeldenetz nach dem DTMF-Verfahren (Doppelton-Mehrfrequenz-Verfahren) in Tonsignale umgesetzt. Mit dem Generator G werden - wie bereits erläutert - die Wählsignale erzeugt. Beim erfindungsgemäßen Anrufbeantworter AB wird der Generator G als Einrichtung E zur Erzeugung von Tonsignalen, insbesondere des Besetzttons, mitbenutzt. Gleiches gilt für den Fall der Bandblockierung, Bandriß, Bandende des Magnetspeichers MSP.

## Patentansprüche

1. Anrufbeantworter mit einer Steuereinrichtung, insbesondere einem Mikroprozessor (MP) zur Steuerung der verschiedenen Gerätefunktionen und des Austausches vermittlungstechnischer Informationen mit den Vermittlungsstellen des angeschlossenen Nachrichtensystems und mit einem Magnetbandspeicher (MSP) und/oder einem digitalen Speicher (SP) zur Speicherung von Sprachsignalen wie Ansagen des gerufenen Teilnehmers, Nachrichten des rufenden Teilnehmers o.dgl.,
**dadurch gekennzeichnet**,
daß der Anrufbeantworter (AB) in an sich bekannter Weise eine Einrichtung (E) zur Erzeugung von Signaltönen und/oder Hinweistönen enthält und daß bei bestehender Verbindung zwischen Anrufbeantworter (AB) und rufenden Teilnehmer mittels Steuereinrichtung (MP) und Einrichtung (E) - nach der Aufzeichnung der Nachricht des rufenden Teilnehmers oder bei einer Störung des Aufzeichnungsteils des Anrufbeantworters (AB) oder bei einer vollständigen Belegung des Speichers (MSP, SP) - zum rufenden Teilnehmer anstelle der Schlußansage ein Besetztsignal in Form von Signaltönen und/oder Hinweistönen übermittelt wird, wodurch die Speicherung der Schlußansage im Magnetbandspeicher (MSP) oder digitalen Speicher (SP) entfällt.

## Claims

1. Telephone answering machine having a control device, in particular a microprocessor (MP), for controlling the various appliance functions and the exchange of switching information with the switching centres of the connected communications system, and having a magnetic tape memory (MSP) and/or a digital memory (SP) for storing speech signals such as called subscriber announcements, calling subscriber messages or the like, characterized in that the telephone answering machine (AB) contains, in a manner known per se, a device (E) for generating signalling tones and/or information tones and in that, if a connection exists between telephone answering machine (AB) and calling subscriber, a busy signal in the form of signalling tones and/or information tones is transmitted instead of the closing announcement to the calling subscriber by means of control device (MP) and device (E) after the message of the calling subscriber has been recorded or in the event of a fault in the recording section of the telephone answering machine (AB) or if the memory (MSP, SP) is completely occupied, as a result of which it is unnecessary to store the closing announcement in the magnetic tape memory (MSP) or digital memory (SP).

## Revendications

1. Répondeur téléphonique comportant un dispositif de commande, notamment un microprocesseur (MP) pour la commande des différentes fonctions d'appareils et de l'échange d'informations techniques de commutation avec les centraux du système raccordé de transmission d'informations et avec une mémoire à bande magnétique (MSP) et/ou une mémoire numérique (SP) pour la mémorisation de signaux vocaux tels que l'annonce de l'abonné appelé, des informations concernant l'abonné appelant ou analogues,
caractérisé en ce
que le répondeur téléphonique (AB) contient, de façon connue en soi, un dispositif (E) pour produire des tonalités de signaux et/ou des tonalités indicatrices et que dans le cas où une liaison existe entre le répondeur téléphonique (AB) et un abonné appelant au moyen du dispositif de commande (MP) et du dispositif (E) - après l'enregistrement de l'information de l'abonné appelant ou dans le cas d'une perturbation de la partie d'enregistrement du répondeur téléphonique (AB) ou dans le cas où la mémoire (MSP, SP) est pleine - un signal d'occupation sous la forme de tonalité de signaux et/ou de tonalité indicatrice est transmis à l'abonné appelant, à la place de l'annonce de fin, ce qui a pour effet que la mémorisation de l'annonce de fin dans la mémoire à bande magnétique (MSP) ou dans la mémoire numérique (SP) est supprimée.
